# EUROPEAN PATENT APPLICATION

(11) **EP 4 684 893 A1**
(43) Date of publication of application: **28.01.2026**
(21) Application number: 24861558.5
(22) Date of filing: 23.05.2024
(51) Int. Cl.: B21C 27/00, B21C 33/02, B21C 23/21

(54) **PREPARATION APPARATUS AND METHOD FOR LITHIUM METAL MATERIAL**

(30) Priority: 04.09.2023 CN 202311132523
(71) Applicant: Chongqing Tianqi Lithium Co., Ltd., Chongqing 402560 (CN); Tianqi Lithium Genesis Technology (Shenzhen) Ltd., Shenzhen, Guangdong 518000 (CN)
(72) Inventor: AI, Wangsheng, Chongqing 402560 (CN); WU, Yongpeng, Chongqing 402560 (CN); WANG, Guang, Chongqing 402560 (CN); LIU, Qiang, Chongqing 402560 (CN); LIU, Kecheng, Chongqing 402560 (CN); WAN, Yuanjie, Chongqing 402560 (CN)
(74) Representative: MacLachlan IP Limited
(86) International application number: PCT/CN2024/094881
(87) International publication number: WO 2025/050710

(57) **Abstract**

The present disclosure belongs to the field of lithium metal product production technology, and particularly relates to a device and method for preparing lithium metal products, which enables continuous production of lithium products, wherein an extrusion barrel is vertically disposed, with openings upward, an extrusion mechanism has a vertically disposed push rod, which protrudes into an inner cavity of the extrusion barrel through an opening on an upper end of the extrusion barrel, and a lower end of the push rod is connected with a pressing plate adapted to the inner cavity of the extrusion barrel; a base plate of the extrusion barrel is provided with an openable/closable lithium product outlet; a first lithium conveying pipe is arranged at a feed port of a lithium storage tank, and a discharge port of the lithium storage tank communicates with the feed port of the extrusion barrel through a second lithium conveying pipe; and an initial position of the pressing plate is located above the feed port of the extrusion barrel, and a first gate valve is arranged on the second lithium conveying pipe. The lithium metal can be effectively prevented from being oxidized or nitrided by reducing an ingot casting process thereof, thereby enabling resource conservation. This facilitates removal of the lithium metal adhering to an inner wall of the extrusion barrel, thereby enabling convenient operation and labor savings as well as enhancing production efficiency.

## Description

### CROSS-REFERENCE TO RELATED APPLICATIONS

This application claims benefit and priority to Chinese Patent Application No. CN 2023111325237, filed on September 4, 2023, which is hereby incorporated by reference and for all other purposes in its entirety.

### TECHNICAL FIELD

The present disclosure belongs to the field of lithium metal product production technology, and specifically relates to a device and method for preparing lithium metal products.

### BACKGROUND

A lithium metal anode has become a research hotspot in the energy industry, and various types of power batteries have, to varying degrees, employed lithium metal as anode materials. The lithium metal, as an anode material, needs to be fabricated into suitable shapes and dimensions. The conventional process involves casting the lithium metal into lithium ingots, placing the lithium ingots into an extrusion barrel, and applying force to the lithium ingots by a pressing mechanism, thereby extruding the lithium ingots through an extrusion outlet in a mould and forming lithium strips, lithium rods, lithium bars, etc. At present, the lithium strips have been applied most widely and demanded most extensively.

As an example, Chinese Patent Application No. 202223421363.1 discloses a lithium strip pressing device, in which a vacuum chamber is configured to accommodate lithium ingots and is provided with a heating section capable of heating the lithium ingots; once heated, the lithium ingots can enter a pressing chamber through a communication port; a pressing section is arranged on another end of the pressing chamber and has an pressing end that extends into the pressing chamber, and the pressing end is capable of pressing the lithium ingots toward a lithium product outlet, thereby obtaining a lithium strip. As an another example, Chinese Patent Application No. 202310200606.9 discloses a lithium strip forming device and method, the device comprises an extrusion barrel with an inner cavity and openings on both ends, a push rod is inserted into the extrusion barrel and slidably connected thereto; one end, away from an outlet, of the push rod is provided with a driving mechanism, one end, away from the push rod, of the extrusion barrel is provided with an extrusion die, and the push rod presses lithium ingots in the extrusion barrel, so that the lithium metal is extruded through an extrusion outlet on the extrusion die, thereby forming a lithium strip.

The preparation of existing battery-grade lithium strips mainly encounters the following technical problems:
First, battery-grade lithium metal obtained by distillation is cast into molds, and then lithium ingots are demolded and packaged. Due to the high reactivity thereof, the lithium metal needs to be cast and demolded in an argon-filled glove box to prevent the lithium metal from being in contact with air, which would cause oxidation and nitridation of the lithium metal. This process not only involves extremely high safety risks but also requires high environmental conditions, resulting in relatively high production costs.
Second, the cast lithium metal ingots need to be packaged and stored before being transported to the equipment for lithium strip production. Owing to the special properties of the lithium metal, its transportation and packaging require special conditions, leading to high costs. After being transported to a lithium product preparation area, the lithium ingots must be unpackaged first, and then the ingots can be placed into the extrusion barrel only after oxide and nitride scales on the surfaces thereof are removed. This not only increases time costs but also causes unnecessary loss.
Third, due to the high viscosity of the lithium metal, the residual lithium metal remains on the inner wall of the extrusion barrel after the extrusion mechanism extrudes the lithium metal from the extrusion barrel. This makes extremely difficult to remove, resulting in increased production costs.

### SUMMARY

The technical problem to be solved by the present disclosure is to provide a device and method for preparing lithium metal products, which enables continuous production of lithium products.

To solve the technical problem, the present disclosure provides the technical solution as below: A device for preparing lithium metal products, comprising a lithium storage tank, an extrusion barrel, an extrusion mechanism and a frame, wherein the lithium storage tank, the extrusion barrel, and the extrusion mechanism are arranged on the frame;
the extrusion barrel is vertically disposed, with openings upward, the extrusion mechanism has a vertically disposed push rod, which protrudes into an inner cavity of the extrusion barrel through an opening on an upper end of the extrusion barrel, and a lower end of the push rod is connected with a pressing plate adapted to the inner cavity of the extrusion barrel; a base plate of the extrusion barrel is provided with an openable/closable lithium product outlet;
a first lithium conveying pipe is arranged at a feed port of the lithium storage tank, a discharge port of the lithium storage tank communicates with the feed port of the extrusion barrel through a second lithium conveying pipe; and an initial position of the pressing plate is located above the feed port of the extrusion barrel, and a first gate valve is arranged on the second lithium conveying pipe.

Further, the device further comprises a seal ring arranged at the opening on the upper end of the extrusion barrel, wherein the seal ring is located between the push rod of the extrusion mechanism and an inner sidewall of the extrusion barrel;
the device further comprise a first vacuum pump arranged on the frame, an air inlet of the first vacuum pump communicates with the inner cavity of the extrusion barrel through a first exhaust pipe, and a connection between the first exhaust pipe and the extrusion barrel is located between the initial position of the pressing plate and the seal ring.

Further, the device further comprises a flange plate arranged circumferentially around a barrel body of the extrusion barrel, wherein the flange plate is connected to the opening on the upper end of the extrusion barrel;
the flange plate (201) is provided with an exhaust passage in communication with the inner cavity of the extrusion barrel, an air nozzle connector, in communication with the exhaust passage, is connected onto the flange plate and is located on an outside of the flange plate; and one end, away from the air inlet of the first vacuum pump, of the first exhaust pipe is arranged on the air nozzle connector.

Further, the device further comprises a second vacuum pump arranged on the frame, wherein a second exhaust pipe, in communication with an air inlet of the second vacuum pump, is arranged on the top of the lithium storage tank; and
a second gate valve is arranged on the first lithium conveying pipe.

Further, an inert gas inlet pipe, in communication with the inner cavity of the lithium storage tank, is arranged on the top of the lithium storage tank, and a third gate valve is arranged on the inert gas inlet pipe.

Further, a driving mechanism for driving the seal ring to raise or lower is arranged on the frame and connected to the seal ring.

Further, a base plate of the extrusion barrel is detachably arranged on a lower end of the barrel body of the extrusion barrel, and the barrel body of the extrusion barrel is provided with a heating mechanism.

Further, the base plate opens or closes an opening on the lower end of the barrel body of the extrusion barrel through a lifting mechanism, and the lifting mechanism is located below the base plate and connected to the base plate.

Further, the base plate is detachably connected to the lifting mechanism.

Further, the device further comprises a bottom cover, which is detachably connected to the base plate through a connecting member and located above the base plate; and
the bottom cover is detachably arranged to cover the opening on the lower end of the barrel body of the extrusion barrel.

Further, the device further comprises a seal ring arranged circumferentially around the barrel body of the extrusion barrel, the seal ring is arranged on an outer sidewall of the barrel body of the extrusion barrel, and is adjacent to the opening on the lower end of the extrusion barrel; and
when the bottom cover closes the opening on the lower end of the barrel body of the extrusion barrel, the bottom cover and the barrel body of the extrusion barrel are sealed by the seal ring.

Further, the barrel body of the extrusion barrel is provided with a cooling mechanism.

Further, the first gate valve is a metering valve.

Further, electric heating wires are wound and arranged on both the first lithium conveying pipe and the second lithium conveying pipe.

Further, the lithium storage tank has a volume of 50L to 400L and an effective volume of ≥80%.

Further, the extrusion barrel has an inner diameter of 200mm to 500mm.

A method for preparing lithium metal products using the device for preparing the lithium metal products, comprising the following steps:
S1: closing a first gate valve to allow a molten lithium metal obtained from preparation to flow into a lithium storage tank through a first lithium conveying pipe;
S2: closing a lithium product outlet on a base plate of an extrusion barrel to position a pressing plate at an initial position, and opening the first gate valve to allow the molten lithium metal in the lithium storage tank to flow into the extrusion barrel through a second lithium conveying pipe;
S3: after the molten lithium metal in the extrusion barrel is cooled and solidified, opening the lithium product outlet, and driving, by the extrusion mechanism, the pressing plate to press downward the cooled and solidified lithium metal, enabling a lithium product to be discharged from the lithium product outlet.

Further, the method further comprises step S01 prior to the step S1: after closing a second gate valve arranged on the first lithium conveying pipe and a first gate valve, pumping an inner cavity of the lithium storage tank to a vacuum state by a second vacuum pump, and then feeding an inert gas into the lithium storage tank through an inert gas inlet pipe arranged on the top of the lithium storage tank.

Further, the step S2 comprises the following steps:
S21: closing the lithium product outlet on the base plate of the extrusion barrel, positioning the pressing plate at the initial position, and arranging a seal ring at an opening on an upper end of the extrusion barrel to seal a gap between a push rod of the extrusion mechanism and an inner sidewall of the extrusion barrel;
S22: pumping the inner cavity of the extrusion barrel to a vacuum state by the first vacuum pump;
S23: opening the first gate valve to allow the molten lithium metal in the lithium storage tank to flow into the extrusion barrel through the second lithium conveying pipe.

Further, closing the lithium product outlet on the base plate of the extrusion barrel in the step S2 comprises the following processes: a base plate is detachably arranged to a lower end of the barrel body of the extrusion barrel, and a bottom cover capable of closing the lithium product outlet is connected above the base plate; and a lifting mechanism is connected to the base plate and located below the base plate, the lifting mechanism lifts the base plate and the bottom cover, and an opening on the lower end of the barrel body of the extrusion barrel is closed by the bottom cover.

Further, when the bottom cover closes the opening on the lower end of the barrel body of the extrusion barrel, the bottom cover and the barrel body of the extrusion barrel are sealed by a seal ring arranged on an outer sidewall of the barrel body of the extrusion barrel.

Further, opening the lithium product outlet in the step S3 comprises the following processes: after the molten lithium metal in the extrusion barrel is cooled and solidified, the lifting mechanism lowers the bottom cover and the base plate; after the bottom cover is removed from the base plate, the lithium product outlet is opened, and the lifting mechanism lifts the base plate to close the opening on the lower end of the barrel body of the extrusion barrel through the base plate.

Further, in the step S3, the molten lithium metal in the extrusion barrel is cooled and solidified by the cooling mechanism.

Further, the method further comprises a step S4 after the step S3: lowering, by the lifting mechanism, the base plate, providing the bottom cover on the base plate, lifting, by the lifting mechanism, the base plate and the bottom cover, and closing, by the bottom cover, the opening on the lower end of the barrel body of the extrusion barrel and thus closing the lithium product outlet; heating, by a heating mechanism, the extrusion barrel to melt lithium metal adhering to an inner wall of the extrusion barrel and flow down to the bottom of the extrusion barrel; and cooling and solidifying, by the cooling mechanism, the lithium metal flown down to the bottom of the extrusion barrel, lowering, by the lifting mechanism, the bottom cover and the base plate, and then removing the cooled and solidified lithium metal from beneath the extrusion barrel.

Further, the heating mechanism has a heating temperature of ≥200°C.

Further, the cooling mechanism has a cooling temperature of ≤10°C.

Compared with prior art, the beneficial effects of the present disclosure are as follows: the present disclosure is to provide a device and method for preparing lithium metal products, which enables continuous production of lithium products. The lithium metal can be effectively prevented from being oxidized or nitrided by reducing an ingot casting process thereof, thereby enabling resource conservation. This facilitates removal of the lithium metal adhering to an inner wall of the extrusion barrel, thereby enabling convenient operation and labor savings as well as enhancing production efficiency.

### BRIEF DESCRIPTION OF THE FIGURES

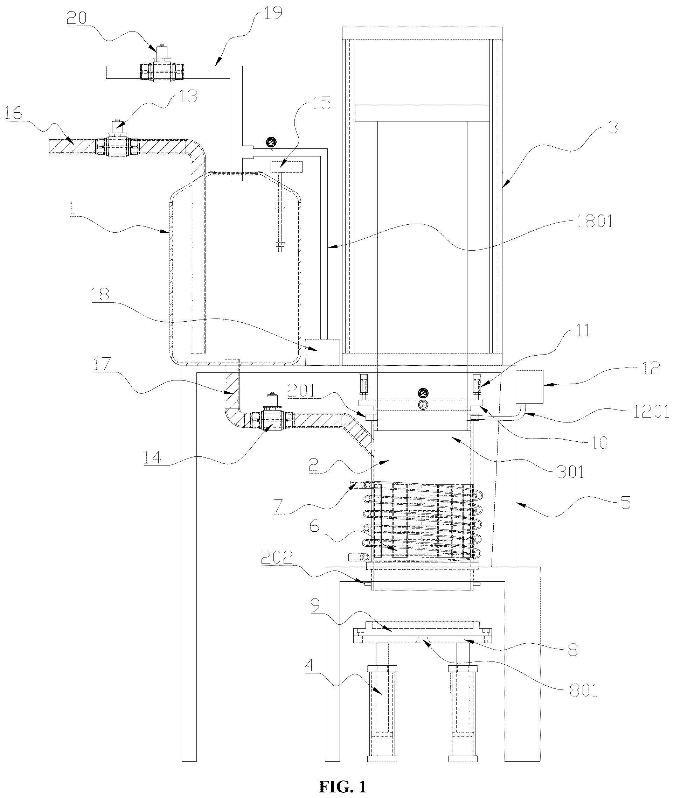

Fig. 1 is a schematic structural diagram of the present disclosure.

Appended drawing reference signs: 1-Lithium storage tank; 2-Extrusion barrel; 201-Flange plate; 202-Sealing ring; 3-Extrusion mechanism; 301-Pressing plate; 4-Lifting mechanism; 5-Frame; 6-Heating mechanism; 7-Cooling mechanism; 8-Base plate; 801-Lithium product outlet; 9-Bottom cover; 10-Seal ring; 11-Driving mechanism; 12-First vacuum pump; 1201-First exhaust pipe; 13-Second gate valve 14-First gate valve; 15-High-temperature level gauge; 16-First lithium conveying pipe; 17-Second lithium conveying pipe; 18-Second vacuum pump; 1801-Second exhaust pipe; 19-Inert gas inlet pipe; 20-Third gate valve.

### DESCRIPTION OF THE INVENTION

The present disclosure will be further clarified based on the following figures and embodiments.

A device for preparing lithium metal products, comprising a lithium storage tank 1, an extrusion barrel 2, an extrusion mechanism 3, and a frame 5, wherein the lithium storage tank 1, the extrusion barrel 2, and the extrusion mechanism 3 are arranged on the frame 5; an extrusion barrel 2 is vertically disposed, with openings upward, the extrusion mechanism 3 has a vertically disposed push rod, which protrudes into an inner cavity of the extrusion barrel 2 through an opening on an upper end of the extrusion barrel 2, and a lower end of the push rod is connected with a pressing plate 301 adapted to the inner cavity of the extrusion barrel 2; a base plate 8 of the extrusion barrel 2 is provided with an openable/closable lithium product outlet 801; a first lithium conveying pipe 16 is arranged at a feed port of a lithium storage tank 1, and a discharge port of the lithium storage tank 1 communicates with the feed port of the extrusion barrel 2 through a second lithium conveying pipe 17; and an initial position of the pressing plate 301 is located above the feed port of the extrusion barrel 2, and a first gate valve 14 is arranged on the second lithium conveying pipe 17.

The frame 5 provides support for arrangement of the lithium storage tank 1, the extrusion barrel 2, and the extrusion mechanism 3. The lithium storage tank 1 has a volume of 50L to 400L and an effective volume of ≥80%. The extrusion barrel 2 includes a barrel body with openings at both the top and bottom ends, and a base plate 8 arranged at the lower end of the barrel body. The extrusion barrel 2 has an inner diameter of 200mm to 500mm. Closing the lithium product outlet 801 and the first gate valve 14 enables the pressing plate 301 to be located at the initial position. The molten lithium metal is obtained by electrolyzing molten lithium chloride to produce crude lithium ingots, and then distilling the crude lithium ingots. This meets the requirements for battery-grade lithium metal. The molten lithium metal flows into the lithium storage tank 1 through the first lithium conveying pipe 16 for enrichment. When there is more molten lithium metal in the lithium storage tank 1, the first gate valve 14 is opened to allow the molten lithium metal to flow into the extrusion barrel 2 through the second lithium conveying pipe 17. The molten lithium metal flowing into the extrusion barrel 2 is located below the pressing plate 301. After the lithium metal in the extrusion barrel 2 is cooled and solidified, the lithium product outlet 801 is opened, and the push rod of the extrusion mechanism 3 protrudes downward and drives the pressing plate 301 to press downward the lithium metal, enabling the lithium product to be discharged from the lithium product outlet 801. This enables continuous production of lithium products. **In** actual operation, the entire device is placed in a drying room with a dew point thereof of -50 °C and below.

The extrusion mechanism 3 is either a hydraulic cylinder or a pneumatic cylinder. When the extrusion mechanism 3 is the hydraulic cylinder, a piston rod of the hydraulic cylinder serves as the push rod; and when the extrusion mechanism 3 is a pneumatic cylinder, the piston rod of the pneumatic cylinder serves as the push rod.

Preferably, the device further comprises a seal ring 10 arranged at the opening on the upper end of the extrusion barrel 2, the seal ring 10 is located between the push rod of the extrusion mechanism 3 and the inner sidewall of the extrusion barrel 2. The device further comprises a first vacuum pump 12 arranged on the frame 5, wherein an air inlet of the first vacuum pump 12 communicates with the inner cavity of the extrusion barrel 2 through a first exhaust pipe 1201, and a connection between the first exhaust pipe 1201 and the extrusion barrel 2 is located between the initial position of the pressing plate 301 and the seal ring 10. The first gate valve 14 and the lithium product outlet 801 are closed, and the seal ring 10 is arranged at the opening on the upper end of the extrusion barrel 2, so that the seal ring 10 seals a gap between the inner sidewall of the extrusion barrel 2 and the push rod. After the inner cavity of the extrusion barrel 2 is pumped to a vacuum state by the first vacuum pump 12, the first gate valve 14 is opened to allow the molten lithium metal in the lithium storage tank 1 to flow into the extrusion barrel 2, thereby preventing the lithium metal in the inner cavity of the extrusion barrel 2 from coming into contact with air. The seal ring 10 is made of high-temperature resistant rubber, preferably silicone rubber or fluororubber. Silicone rubber and fluororubber products can still keep a good performance even at temperatures above 200 °C.

The first exhaust pipe 1201 may be connected onto the barrel body of the extrusion barrel 2. Preferably, the device further comprises a flange plate 201 arranged circumferentially along the barrel body of the extrusion barrel 2, and the flange plate 201 is connected to the opening on the upper end of the extrusion barrel 2; an exhaust passage, in communication with the inner cavity of the extrusion barrel 2, is connected on the flange plate 201, an air nozzle connector, in communication with the exhaust pipe, is connected on the flange plate 201, the nozzle connector is located on an outside of the flange plate 201, and one end, away from the air inlet of the first vacuum pump 12, of the first exhaust pipe 1201 is arranged on the air nozzle connector. The flange plate 201 is connected to the extrusion barrel 2 by welding. The connection between the air nozzle connector and the flange plate 201 is based on the prior art, and the air nozzle connector provides support for connection and arrangement of the first exhaust pipe 1201. The seal ring 10, after being arranged, comes into contact with the flange plate 201.

Preferably, the device further comprises a second vacuum pump 18 arranged on the frame 5, wherein a second exhaust pipe 1801, in communication with the air inlet of the second vacuum pump 18, is arranged on the top of lithium storage tank 1, a second gate valve 13 is arranged on the first lithium conveying pipe 16, and the frame 5 provides support for arrangement of the second vacuum pump 18. The second gate valve 13 and the first gate valve 14 are closed; and after the inner cavity of the lithium storage tank 1 is pumped to a vacuum state through the second vacuum pump 18, the second gate valve 13 is opened to allow the molten lithium metal to flow into the lithium storage tank 1 through the first lithium conveying pipe 16 for enrichment, thereby preventing the lithium metal in the lithium storage tank 1 from coming into contact with air.

Preferably, an inert gas inlet pipe 19, in communication with the inner cavity of the lithium storage tank 1, is arranged on the top of the lithium storage tank, and a third gate valve 20 is arranged on the inert gas inlet pipe 19. When the second vacuum pump 18 operates, the third gate valve 20 is closed. After the second vacuum pump 18 pumps the inner cavity of the lithium storage tank 1 to a vacuum state, the third gate valve 20 is opened to allow inert gas to flow into the lithium storage tank 1, thereby equalizing a pressure in the tank with an atmospheric pressure and protecting the lithium metal in the lithium storage tank 1. Inert gases include argon, neon, and helium.

Preferably, a driving mechanism 11 for driving the seal ring 10 to raise or lower is arranged on the frame 5 and connected to the seal ring 10. The frame 5 provides support for arrangement of the driving mechanism 11, and the driving mechanism 11 drives the seal ring 10 to move downward and is clamped between the inner sidewall of the extrusion barrel 2 and the push rod of the extrusion mechanism 3. When the push rod needs to be removed from the extrusion barrel 2, the driving mechanism 11 drives the seal ring 10 to move upward, enabling the seal ring 10 to disengage from the opening on the upper end of the extrusion barrel 2, and then the extrusion mechanism 3 drives the push rod to raise, thereby enabling the push rod to be withdrawn from the opening on the upper end of the extrusion barrel 2. In particular, the driving mechanism 11 is a hydraulic cylinder or a pneumatic cylinder, with the piston rod of the hydraulic cylinder or the pneumatic cylinder connected to the seal ring 10.

The base plate 8 of the extrusion barrel 2 and the barrel body of the extrusion barrel 2 may be an integrally connected structure. After the lithium product production is completed, a worker can remove the seal ring 10, and then remove the pressing plate 301 from the opening on the upper end of the extrusion barrel 2 through the extrusion mechanism 3. Afterwards, the worker scrapes off and removes the lithium metal from the inner wall of the extrusion barrel 2 with a scraper. However, the above method has the disadvantages of being inconvenient to operate. Preferably, to facilitate the removal of the lithium metal adhering to the inner wall of the extrusion barrel 2 by the worker, preferably, the base plate 8 of the extrusion barrel 2 is detachably arranged on the lower end of the barrel body of the extrusion barrel 2. The barrel body of the extrusion barrel 2 is provided with a heating mechanism 6 with a heating temperature of ≥200 °C. After the lithium product production is completed, the base plate 8 of the extrusion barrel 2 is kept in a state where it closes the opening on the lower end of the barrel body of the extrusion barrel 2, and the lithium product outlet 801 is closed. The heating mechanism 6 heats the lithium metal in the extrusion barrel 2 to above 200 °C, enabling the lithium metal adhering to the inner wall of the extrusion barrel 2 to melt and making the molten lithium metal flow down to the bottom of the extrusion barrel 2. After the molten lithium metal flown down to the bottom of the extrusion barrel 2 is cooled and solidified, the base plate 8 is opened to recover the solidified lithium metal. It has the advantages of enabling easy operation and labor savings as well as improving work efficiency. The heating mechanism 6 is preferably an electric heating block arranged on an outer wall of the extrusion barrel 2, and the electric heating block is based on the prior art.

The base plate 8 and the barrel body of the extrusion barrel 2 can be connected through a slide block and slide groove structure, allowing the opening on the lower end of barrel body of the extrusion barrel 2 to be opened or closed. Preferably, the base plate 8 opens or closes the opening on the lower end of the barrel body of the extrusion barrel 2 through the lifting mechanism 4; and the lifting mechanism 4 is located below the base plate 8 and connected to the base plate 8.

Preferably, the base plate 8 is detachably connected to the lifting mechanism 4. When different types of lithium products need to be produced, this is achieved by replacing the base plate 8; and lithium product outlets 801 on different base plates 8 have different shapes. In particular, the lifting mechanism 4 is preferably a hydraulic cylinder or a pneumatic cylinder. When the lifting mechanism 4 is the hydraulic cylinder, the piston rod of the hydraulic cylinder is detachably connected to the base plate 8 through bolts or a snap-fit slot structure. When the lifting mechanism 4 is the pneumatic cylinder, the piston rod of the pneumatic cylinder is detachably connected to the base plate 8 through bolts or a snap-fit slot structure.

Preferably, the device further comprises a bottom cover 9, which is detachably connected to the base plate 8 through a connecting member and located above the base plate 8; and the bottom cover 9 is detachably arranged to cover the opening on the lower end of the barrel body of the extrusion barrel 2. The bottom cover 9 is a cover body structure with an upward opening. The bottom cover 9 not only serves to open or close the lithium product outlet 801 on the base plate 8 but also functions to open or close the opening on the lower end of the barrel body of the extrusion barrel 2. By sealing the opening on the lower end of the barrel body of the extrusion barrel 2 using the bottom cover 9, the molten lithium metal can be prevented from leaking from the lower end of the barrel body. Before the molten lithium metal flows into the extrusion barrel 2, the bottom cover 9 is connected to the base plate 8 through the connecting member, and then the bottom cover 9 is lifted by the lifting mechanism 4 to close the opening on the lower end of the barrel body of the extrusion barrel 2. After the lithium metal in the extrusion barrel 2 is cooled and solidified and during lithium product production, the lifting mechanism 4 lowers the bottom cover 9 and the base plate 8. After the bottom cover 9 is detached from the base plate 8, the base plate 8 is lifted by the lifting mechanism 4 to close the opening on the lower end of the barrel body of the extrusion barrel 2. When the lithium metal adhering to the inner wall of the extrusion barrel 2 needs to be recovered, the base plate 8 is lowered by the lifting mechanism 4, the bottom cover 9 is arranged on the base plate 8 through the connecting member, and then the bottom cover 9 is lifted by the lifting mechanism 4 to close the opening on the lower end of the barrel body of the extrusion barrel 2. The lithium metal adhering to the inner wall of the extrusion barrel 2 is heated to be in a molten state by the heating mechanism 6 and then flows down to the bottom of the extrusion barrel 2. After the lithium metal at the bottom of the extrusion barrel 2 is cooled and solidified, the bottom cover 9 and the base plate 8 are lowered by the lifting mechanism 4 to recover the lithium metal. The connecting member may be implemented in various ways, and in particular, the base plate 8 and the bottom cover 9 are detachably connected through the bolts or the snap-fit slot structure.

Preferably, the device further comprises a seal ring 202 arranged circumferentially around the barrel body of the extrusion barrel 2, the seal ring 202 is arranged on the outer sidewall of the barrel body of the extrusion barrel 2, and is adjacent to the opening on the lower end of the extrusion barrel 2; and when the bottom cover 9 closes the opening on the lower end of the barrel body of the extrusion barrel 2, the bottom cover 9 and the barrel body of the extrusion barrel 2 are sealed by the seal ring 202. When the bottom cover 9 closes the opening on the lower end of the barrel body of the extrusion barrel 2, the seal ring 202 seals a gap between the bottom cover 9 and the barrel body of the extrusion barrel 2, facilitating the first vacuum pump 12 in pumping the inner cavity of the extrusion barrel 2 to a vacuum state. The seal ring 202 is made of high-temperature resistant rubber, preferably silicone rubber or fluororubber. Silicone rubber and fluororubber products can still keep a good performance even at temperatures above 200 °C.

The seal ring 202 can be arranged in various ways. In Embodiment 1, the seal ring 202 may be connected to the outer sidewall of the barrel body of the extrusion barrel 2 by screws. In Embodiment 2, the outer sidewall of the barrel body of the extrusion barrel 2 is connected with a mounting ring circumferentially therearound by welding, and the seal ring 202 is connected to the mounting ring by bolts or the snap-fit slot structure and is located below the mounting ring.

Preferably, an upper surface of the bottom cover 9 is coated with oil to prevent the lithium metal from adhering to the bottom cover 9.

To accelerate a cooling rate of the molten lithium metal in the extrusion barrel 2, preferably, the extrusion barrel 2 is provided with a cooling mechanism 7. When the molten lithium metal in the extrusion barrel 2 needs to be cooled, the cooling rate of the molten lithium metal in the extrusion barrel 2 is accelerated by the cooling mechanism 7. The cooling mechanism 7 is preferably a cooling water pipe arranged around an outer circumferential surface of the extrusion barrel 2, which is a prior art. A cooling temperature of the cooling mechanism 7 is ≤10 °C.

Preferably, a high-temperature level gauge 15 is arranged on the lithium storage tank 1, a probe of the high-temperature level gauge 15 is located in the lithium storage tank 1, and a head of the high-temperature level gauge 15 is located outside the tank 1. The high-temperature level gauge 15 is a prior art, with a model of HCUS-500.

Preferably, the first gate valve 14 is a metering valve. The metering valve is capable of measuring the molten lithium metal flowing therethrough. The metering valve closes when reaching a preset threshold, thereby achieving the purpose of automatic control. The metering valve is a prior art, with a model of 381LSB-30 and a flow rate of ≥5 L/min.

Preferably, to prevent the molten lithium metal from adhering to the inner walls of the first lithium conveying pipe 16 and the second lithium conveying pipe 17 upon cooling, electric heating wires are wound and arranged on both the first lithium conveying pipe 16 and the second lithium conveying pipe 17. By heating through the electric heating wires, the lithium metal flowing through the first lithium conveying pipe 16 and the second lithium conveying pipe 17 is kept in a molten state. The heating temperature of the electric heating wires is 200 °C to 250 °C.

A method for preparing lithium metal products using the device for preparing the lithium metal products, comprising the following steps:
S1: closing a first gate valve 14 to allow a molten lithium metal obtained from preparation to flow into a lithium storage tank 1 through a first lithium conveying pipe 16.

Preferably, the method further comprises a step S01 prior to the step S1: after closing a second gate valve 13 arranged on the first lithium conveying pipe 16 and a first gate valve 14, pumping an inner cavity of the lithium storage tank 1 to a vacuum state by a second vacuum pump 18, and then feeding an inert gas into the lithium storage tank 1 through an inert gas inlet pipe 19 arranged on the top of the lithium storage tank 1. Inert gases include argon, neon, and helium.

S2: closing a lithium product outlet 801 on a base plate 8 of an extrusion barrel 2 to position a pressing plate 301 at an initial position, and opening the first gate valve 14 to allow the molten lithium metal in the lithium storage tank 1 to flow into the extrusion barrel 2 through a second lithium conveying pipe 17.

**In** particular, the step S2 comprises the following processes:
S21: closing the lithium product outlet 801 on the base plate 8 of the extrusion barrel 2, positioning the pressing plate 301 at the initial position, and arranging a seal ring 10 at an opening on an upper end of the extrusion barrel 2 to seal a gap between a push rod of the extrusion mechanism 3 and an inner sidewall of the extrusion barrel 2;
S22: pumping the inner cavity of the extrusion barrel 2 to a vacuum state by the first vacuum pump 12;
S23: opening the first gate valve 14 to allow the molten lithium metal in the lithium storage tank 1 to flow into the extrusion barrel 2 through the second lithium conveying pipe 17.

In particular, closing the lithium product outlet 801 on the base plate 8 of the extrusion barrel 2 in the step S2 comprises the following processes: a base plate 8 is detachably arranged to a lower end of the barrel body of the extrusion barrel 2, and a bottom cover 9 capable of closing the lithium product outlet 801 is connected above the base plate 8; and a lifting mechanism 4 is connected to the base plate 8 and located below the base plate 8, the lifting mechanism 4 lifts the base plate 8 and the bottom cover 9, and an opening on the lower end of the barrel body of the extrusion barrel 2 is closed by the bottom cover 9.

S3: after the molten lithium metal in the extrusion barrel 2 is cooled and solidified, opening the lithium product outlet 801, and driving, by the extrusion mechanism 3, the pressing plate 301 to press downward the cooled and solidified lithium metal, enabling a lithium product to be discharged from the lithium product outlet 801.

In particular, opening the lithium product outlet 801 in the step S3 comprises the following processes: after the molten lithium metal in the extrusion barrel 2 is cooled and solidified, the lifting mechanism 4 lowers the bottom cover 9 and the base plate 8; after the bottom cover 9 is removed from the base plate 8, the lithium product outlet 801 is opened, and the lifting mechanism 4 lifts the base plate 8 to close the opening on the lower end of the barrel body of the extrusion barrel 2 through the base plate 8.

Preferably, when the bottom cover 9 closes the opening on the lower end of the barrel body of the extrusion barrel 2, the bottom cover 9 and the barrel body of the extrusion barrel 2 are sealed by a seal ring 202 arranged on an outer sidewall of the barrel body of the extrusion barrel 2. This facilitates the first vacuum pump 12 in pumping the inner cavity of the extrusion barrel 2 to a vacuum state.

In particular, in the step S3, the molten lithium metal in the extrusion barrel 2 is cooled and solidified by the cooling mechanism 7.

The method further comprises a step S4 after the step S3: lowering, by the lifting mechanism 4, the base plate 8, arranging the bottom cover 9 on the base plate 8, lifting, by the lifting mechanism 4, the base plate 8 and the bottom cover 9, and closing, by the bottom cover 9, the opening on the lower end of the barrel body of the extrusion barrel 2 and thus closing the lithium product outlet 801; heating, by a heating mechanism 6, the extrusion barrel 2 to melt lithium metal adhering to an inner wall of the extrusion barrel 2 and flow down to the bottom of the extrusion barrel 2; and cooling and solidifying, by the cooling mechanism 7, the lithium metal flown down to the bottom of the extrusion barrel 2, lowering, by the lifting mechanism 4, the bottom cover 9 and the base plate 8, and then removing the cooled and solidified lithium metal from beneath the extrusion barrel 2.

The above is the detailed implementation of the present disclosure. As can be seen from the implementation process, the present disclosure provides the device and method for preparing the lithium metal products, which enables continuous production of lithium products. The lithium metal can be effectively prevented from being oxidized or nitrided by reducing an ingot casting process thereof, thereby enabling resource conservation. This facilitates removal of the lithium metal adhering to an inner wall of the extrusion barrel, thereby enabling convenient operation and labor savings as well as enhancing production efficiency.

## Claims

1. A device for preparing lithium metal products, comprising: a lithium storage tank (1), an extrusion barrel (2), an extrusion mechanism (3) and a frame (5), wherein the lithium storage tank (1), the extrusion barrel (2), and the extrusion mechanism (3) are arranged on the frame (5);
the extrusion barrel (2) is vertically disposed, with openings upward, the extrusion mechanism (3) has a vertically disposed push rod, which protrudes into an inner cavity of the extrusion barrel (2) through an opening on an upper end of the extrusion barrel (2), and a lower end of the push rod is connected with a pressing plate (301) adapted to the inner cavity of the extrusion barrel (2); and a base plate (8) of the extrusion barrel (2) is provided with an openable/closable lithium product outlet (801);
a first lithium conveying pipe (16) is arranged at a feed port of the lithium storage tank (1), a discharge port of the lithium storage tank (1) communicates with the feed port of the extrusion barrel (2) through a second lithium conveying pipe (17); and an initial position of the pressing plate (301) is located above the feed port of the extrusion barrel (2), and a first gate valve (14) is arranged on the second lithium conveying pipe (17).

2. The device for preparing the lithium metal products according to claim 1, wherein further comprising: a seal ring (10) arranged at the opening on the upper end of the extrusion barrel (2), the seal ring (10) is located between the push rod of the extrusion mechanism (3) and an inner sidewall of the extrusion barrel (2);
the device further comprising: a first vacuum pump (12) arranged on the frame (5), an air inlet of the first vacuum pump (12) communicates with the inner cavity of the extrusion barrel (2) through a first exhaust pipe (1201), and a connection between the first exhaust pipe (1201) and the extrusion barrel (2) is located between the initial position of the pressing plate (301) and the seal ring (10).

3. The device for preparing the lithium metal products according to claim 2, wherein further comprising: a flange plate (201) arranged circumferentially around a barrel body of the extrusion barrel (2), the flange plate (201) is connected to the opening on the upper end of the extrusion barrel (2);
the flange plate (201) is provided with an exhaust passage in communication with the inner cavity of the extrusion barrel (2), an air nozzle connector in communication with the exhaust passage is connected onto the flange plate (201) and is located on an outside of the flange plate (201); and one end, away from the air inlet of the first vacuum pump (12), of the first exhaust pipe (1201) is arranged on the air nozzle connector.

4. The device for preparing the lithium metal products according to claim 1, wherein further comprising: a second vacuum pump (18) arranged on the frame (5), a second exhaust pipe (1801), in communication with an air inlet of the second vacuum pump (18), is arranged on the top of the lithium storage tank (1); and
a second gate valve (13) is arranged on the first lithium conveying pipe (16).

5. The device for preparing the lithium metal products according to claim 4, wherein an inert gas inlet pipe (19), in communication with the inner cavity of the lithium storage tank, is arranged on the top of the lithium storage tank (1), and a third gate valve (20) is arranged on the inert gas inlet pipe (19).

6. The device for preparing the lithium metal products according to claim 2, wherein a driving mechanism (11) for driving the seal ring (10) to raise or lower is arranged on the frame (5) and connected to the seal ring (10).

7. The device for preparing the lithium metal products according to claim 2, wherein a base plate (8) of the extrusion barrel (2) is detachably arranged on a lower end of the barrel body of the extrusion barrel (2), and the barrel body of the extrusion barrel (2) is provided with a heating mechanism (6).

8. The device for preparing the lithium metal products according to claim 7, wherein the base plate (8) opens or closes an opening on the lower end of the barrel body of the extrusion barrel (2) through a lifting mechanism (4), and the lifting mechanism (4) is located below the base plate (8) and connected to the base plate (8).

9. The device for preparing the lithium metal products according to claim 8, wherein the base plate (8) is detachably connected to the lifting mechanism (4).

10. The device for preparing the lithium metal products according to claim 7, wherein further comprising: a bottom cover (9), which is detachably connected to the base plate (8) through a connecting member and located above the base plate (8); and
the bottom cover (9) is detachably arranged to cover the opening on the lower end of the barrel body of the extrusion barrel (2).

11. The device for preparing the lithium metal products according to claim 10, wherein further comprising: a seal ring (202) arranged circumferentially around the barrel body of the extrusion barrel (2), the seal ring (202) is arranged on an outer sidewall of the barrel body of the extrusion barrel (2), and is adjacent to the opening on the lower end of the extrusion barrel (2); and
when the bottom cover (9) closes the opening on the lower end of the barrel body of the extrusion barrel (2), the bottom cover (9) and the barrel body of the extrusion barrel (2) are sealed by the seal ring (202).

12. The device for preparing the lithium metal products according to claim 1, wherein the barrel body of the extrusion barrel (2) is provided with a cooling mechanism (7).

13. The device for preparing the lithium metal products according to claim 1, wherein the first gate valve (14) is a metering valve.

14. The device for preparing the lithium metal products according to claim 1, wherein electric heating wires are wound and arranged on both the first lithium conveying pipe (16) and the second lithium conveying pipe (17).

15. The device for preparing the lithium metal products according to claim 1, wherein the lithium storage tank (1) has a volume of 50L to 400L and an effective volume of ≥80%.

16. The device for preparing the lithium metal products according to claim 1, wherein the extrusion barrel (2) has an inner diameter of 200mm to 500mm.

17. A method for preparing lithium metal products, using the device for preparing the lithium metal products according to any one of claims 1 to 16, wherein comprising the following steps:
S1: closing a first gate valve (14) to allow a molten lithium metal obtained from preparation to flow into a lithium storage tank (1) through a first lithium conveying pipe (16);
S2: closing a lithium product outlet (801) on a base plate (8) of an extrusion barrel (2) to position a pressing plate (301) at an initial position, and opening the first gate valve (14) to allow the molten lithium metal in the lithium storage tank (1) to flow into the extrusion barrel (2) through a second lithium conveying pipe (17);
S3: after the molten lithium metal in the extrusion barrel (2) is cooled and solidified, opening the lithium product outlet (801), and driving, by the extrusion mechanism (3), the pressing plate (301) to press downward the cooled and solidified lithium metal, enabling a lithium product to be discharged from the lithium product outlet (801).

18. The method for preparing the lithium metal products according to claim 17, wherein further comprising: step S01 prior to the step S1: after closing a second gate valve (13) arranged on the first lithium conveying pipe (16) and a first gate valve (14), pumping an inner cavity of the lithium storage tank (1) to a vacuum state by a second vacuum pump (18), and then feeding an inert gas into the lithium storage tank (1) through an inert gas inlet pipe (19) arranged on the top of the lithium storage tank (1).

19. The method for preparing the lithium metal products according to claim 17, wherein the step S2 comprises the following steps:
S21: closing the lithium product outlet (801) on the base plate (8) of the extrusion barrel (2), positioning the pressing plate (301) at the initial position, and arranging a seal ring (10) at an opening on an upper end of the extrusion barrel (2) to seal a gap between a push rod of the extrusion mechanism (3) and an inner sidewall of the extrusion barrel (2);
S22: pumping the inner cavity of the extrusion barrel (2) to a vacuum state by the first vacuum pump (12);
S23: opening the first gate valve (14) to allow the molten lithium metal in the lithium storage tank (1) to flow into the extrusion barrel (2) through the second lithium conveying pipe (17).

20. The method for preparing the lithium metal products according to claim 17, wherein closing the lithium product outlet (801) on the base plate (8) of the extrusion barrel (2) in the step S2 comprises the following processes: a base plate (8) is detachably arranged to a lower end of the barrel body of the extrusion barrel (2), and a bottom cover (9) capable of closing the lithium product outlet (801) is connected above the base plate (8); and a lifting mechanism (4) is connected to the base plate (8) and located below the base plate (8), the lifting mechanism (4) lifts the base plate (8) and the bottom cover (9), and an opening on the lower end of the barrel body of the extrusion barrel (2) is closed by the bottom cover (9).

21. The method for preparing the lithium metal products according to claim 20, wherein when the bottom cover (9) closes the opening on the lower end of the barrel body of the extrusion barrel (2), the bottom cover (9) and the barrel body of the extrusion barrel (2) are sealed by a seal ring (202) arranged on an outer sidewall of the barrel body of the extrusion barrel (2).

22. The method for preparing the lithium metal products according to claim 17, wherein opening the lithium product outlet (801) in the step S3 comprises the following processes: after the molten lithium metal in the extrusion barrel (2) is cooled and solidified, the lifting mechanism (4) lowers the bottom cover (9) and the base plate (8); after the bottom cover (9) is removed from the base plate (8), the lithium product outlet (801) is opened, and the lifting mechanism (4) lifts the base plate (8) to close the opening on the lower end of the barrel body of the extrusion barrel (2) through the base plate (8).

23. The method for preparing the lithium metal products according to claim 17, wherein in the step S3, the molten lithium metal in the extrusion barrel (2) is cooled and solidified by the cooling mechanism (7).

24. The method for preparing the lithium metal products according to claim 22, wherein further comprising a step S4 after the step S3: lowering, by the lifting mechanism (4), the base plate (8), arranging the bottom cover (9) on the base plate (8), lifting, by the lifting mechanism (4), the base plate (8) and the bottom cover (9), and closing, by the bottom cover (9), the opening on the lower end of the barrel body of the extrusion barrel (2) and thus closing the lithium product outlet (801); heating, by a heating mechanism (6), the extrusion barrel (2) to melt lithium metal adhering to an inner wall of the extrusion barrel (2) and flow down to the bottom of the extrusion barrel (2); and cooling and solidifying, by the cooling mechanism (7), the lithium metal flown down to the bottom of the extrusion barrel (2), lowering, by the lifting mechanism (4), the bottom cover (9) and the base plate (8), and then removing the cooled and solidified lithium metal from beneath the extrusion barrel (2).

25. The method for preparing the lithium metal products according to claim 24, wherein the heating mechanism (6) has a heating temperature of ≥200°C.

26. The method for preparing the lithium metal products according to claim 23 or 24, wherein the cooling mechanism (7) has a cooling temperature of ≤10°C.
